# EUROPÄISCHE PATENTSCHRIFT

(11) **EP 3 472 947 B1**
(45) Veröffentlichungstag und Bekanntmachung des Hinweises auf die Patenterteilung: **12.01.2022**
(21) Anmeldenummer: 17733343.2
(22) Anmeldetag: 16.06.2017
(51) Int. Cl.: H04B 10/50, H04B 10/516, H04B 10/70

(54) **VERFAHREN ZUR ÜBERTRAGUNG VON DATEN**
METHOD FOR TRANSFERRING DATA
PROCÉDÉ DE TRANSMISSION DE DONNÉES

(30) Priorität: 17.06.2016 AT 505522016
(43) Veröffentlichungstag der Anmeldung: 24.04.2019
(73) Patentinhaber: AIT Austrian Institute of Technology GmbH, 1210 Wien (AT)
(72) Erfinder: HÜBEL, Hannes, 1180 Wien (AT); SCHRENK, Bernhard, 2340 Mödling (AT)
(74) Vertreter: Wildhack & Jellinek
(86) Internationale Anmeldenummer: PCT/AT2017/060155
(87) Internationale Veröffentlichungsnummer: WO 2017/214655

(56) Entgegenhaltungen:
- US-A- 5 546 190
- US-B1- 7 305 091
- US-B1- 7 346 279
- Paul Jouguet ET AL: "Experimental demonstration of long-distance continuous-variable quantum key distribution", , 23. Oktober 2012 (2012-10-23), XP55260912, DOI: 10.1038/nphoton.2013.63 Gefunden im Internet: URL:http://arxiv.org/pdf/1210.6216v1.pdf [gefunden am 2016-03-24]

## Beschreibung

Die Erfindung betrifft ein Verfahren zur Übertragung von Daten von einem Sender zu einem Empfänger gemäß dem Patentanspruch 1.

Wesentlicher Zweck dieses Verfahrens ist es, Daten von einem Sender zu einem Empfänger zu übertragen, wobei vermieden werden soll, dass die zu übertragenden Daten von Dritten abgefangen und verarbeitet werden, ohne dass der Sender und der Empfänger auf diesen Umstand aufmerksam werden. Technisch ist dies mit Hilfe der Quantenkryptographie realisierbar.

Quantenreceiver aus dem Stand der Technik weisen eine im Vergleich zu Telekommunikationsanwendungen relativ geringe Bandbreite auf. Für Anwendungen in der Quanteninformation bedeutend ist, dass die Schlüsselrate von Systemen zur Quantenkryptographie oder Quantenzufallszahl nur sehr langsam generiert werden können und nicht den Echtzeitbedarf abdecken können. Derzeitige Systeme bieten Übertragungsbandbreiten im Bereich von etwa 100 MHz. Ein Quantenübertragungssystem nach dem Stand der Technik ist aus der US-A-7305091 bekannt.

Aufgabe der Erfindung ist es, ein Verfahren zu schaffen, mit dem eine große Datenmenge sicher mit den Methoden der Quantenkryptographie von einem Sender zu einem Empfänger übertragen werden kann.

Die Erfindung löst diese Aufgabe bei einem Verfahren zur Übertragung von Daten von einem Sender zu einem Empfänger mit den Merkmalen des Patentanspruchs 1.

Bei der Erfindung wird ein Datensignal von einem Sender zu einem Empfänger über einen Datenkanal übertragen. Ein elektromagnetisches Strahlungssignal, insbesondere mit einer Wellenlänge im optischen Bereich oder im Infraroten Bereich, geringer Bandbreite, insbesondere ein Lasersignal, wird erstellt, periodisch gepulst. Es wird derart ein gepulstes Signal erstellt.

Das zu übertragende Datensignal wird elektrisch zur Verfügung gestellt, wobei das gepulste Signal aufgrund des zu übertragenden Datensignals, moduliert wird und derart ein Nutzsignal erstellt wird. Hierfür kann prinzipiell jede beliebige Modulation verwendet werden. Vorzugsweise kann optische Phasen- und/oder Amplitudenmodulation verwendet werden.

Durch Modulation des gepulsten Signals wird ein optisches Referenzsignal mit einer vorgegebenen Frequenz erstellt. Diese Frequenz ist gegenüber der optischen Trägerfrequenz, die für die Phasen- und Amplitudenmodulation des Nutzsignals herangezogen wurde, festgelegt. Insbesondere entspricht sie dieser Frequenz oder weist zu dieser eine konstante Differenz auf.

Das optische Referenzsignal wird optisch phasenstarr zum Nutzsignal festgelegt. Die Phasendifferenz des optischen Referenzsignals und des Nutzsignals hängt vom Datensignal ab.

Das optische Referenzsignal wird mit dem Nutzsignal überlagert. Derart wird ein Übertragungssignal erstellt und am Ausgang des Senders abgegeben. Das Übertragungssignal wird zur Verfügung gehalten, gegebenenfalls über den Datenkanal versandt, insbesondere an einen Empfänger übertragen.

Das im Übertragungssignal enthaltene optische Referenzsignal ist am Ausgang des Senders frei von Informationen, die im Nutzsignal enthalten sind,

Das optische Referenzsignal ist vom Nutzsignal trennbar ist, insbesondere weist es eine von dem Nutzsignal abweichende Frequenz und Polarisation auf.

Das Nutzsignal wird vor und/oder nach der Überlagerung mit dem Referenzsignal derart abgeschwächt, dass der dem Nutzsignal zuzurechnende Anteil des Übertragungssignals maximal 10 Photonen umfasst.

Um eine Phasenkorrektur einfach und sicher durchführen zu können, kann vorgesehen sein, dass das optische Referenzsignal des Übertragungssignals weniger stark abgeschwächt wird als das Nutzsignal, insbesondere dass das Referenzsignal um einen Faktor 10 bis 100 oder um einen Faktor 10 bis 1000 energiereicher ist als das Nutzsignal.

Weiters betrifft die Erfindung den Empfang eines, insbesondere nach Anspruch 1, erstellten Übertragungssignals in einem Empfänger. Im Empfänger wird ein empfängerseitiges optisches Strahlungssignal erstellt. Dieses wird mit dem Übertragungssignal optisch überlagert und mittels eines Photodetektors in ein elektrisches Signal umgewandelt, dessen Signalamplitude nichtlinear, insbesondere quadratisch, von der Lichtstärke des Übertragungssignals abhängt,

Die Frequenz des empfängerseitigen optischen Strahlungssignals wird auf die Frequenz des im Übertragungssignal enthaltenen optischen Referenzsignals oder gegenüber dieser Frequenz festgelegte Frequenz gesetzt.

Aus dem Übertragungssignal wird das Referenzsignal und das Nutzungssignal herausgefiltert.

Für eine Anzahl von Zeitpunkten wird die Phasendifferenz zwischen dem im Übertragungssignal enthaltenen optischen Referenzsignal und dem empfängerseitigen optischen Referenzsignal ermittelt. Gegebenenfalls wird ein bereinigtes Nutzsignal erstellt, das gegenüber dem aus dem Übertragungssignal ermittelten Nutzsignal um die ermittelte Phasendifferenz korrigiert ist.

Mithilfe der so ermittelten Phasendifferenz werden die übertragenen Daten ermittelt. Gegebenenfalls wird das bereinigte Nutzsignal mittels Demodulation, insbesondere Phasen- und/oder Amplitudendemodulation, ermittelt.

Die Erfindung löst diese Aufgabe bei einem Verfahren zur Datenübermittlung und Verfahren zum Empfangen und Analysieren von übermittelten Daten mit den Merkmalen des Patentanspruchs 1.

Vorteilhafte Ausführungsformen der Erfindung sind in den abhängigen Ansprüchen näher dargestellt.

Im Folgenden wird eine bevorzugte Ausführungsform der Erfindung anhand der folgenden Zeichnungsfiguren exemplarisch näher dargestellt.

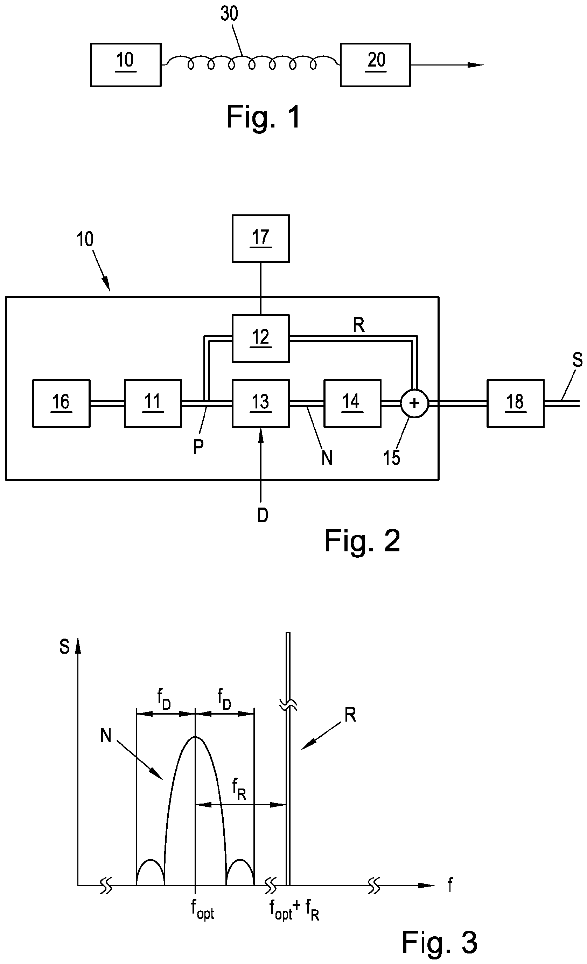

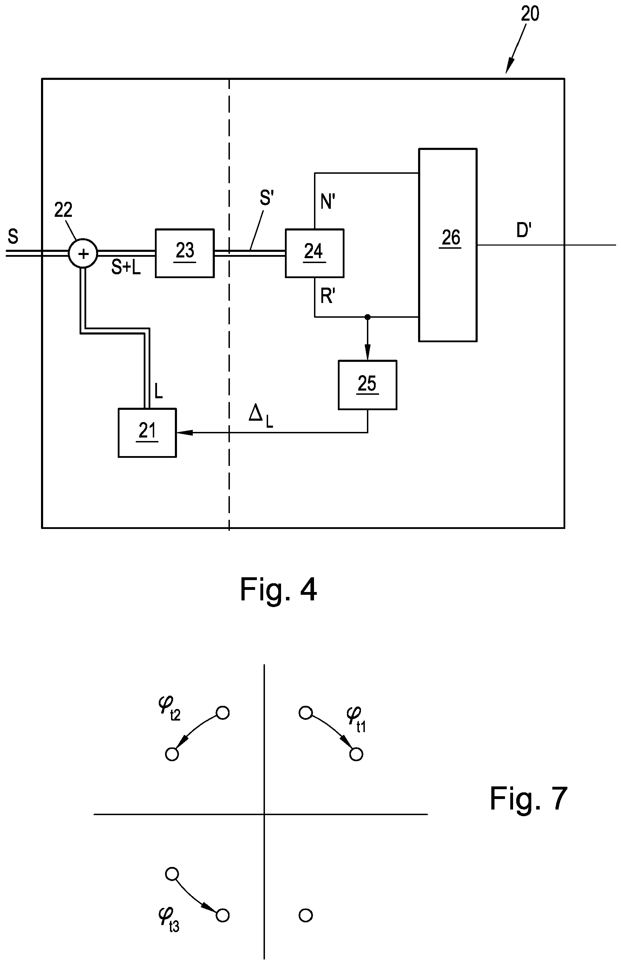

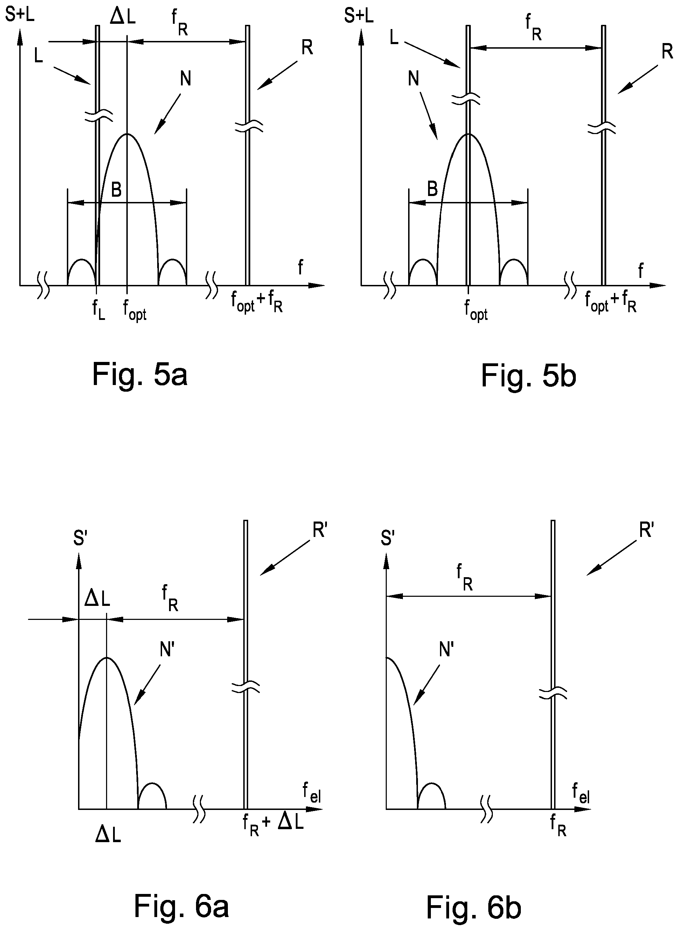

In **Fig. 1** ist ein System zur Übertragung von Daten von einem Sender zu einem Empfänger dargestellt. **Fig. 2** zeigt eine mögliche Ausführungsform eines Senders. **Fig. 3** zeigt schematisch das Frequenzspektrum eines vom Sender abgegebenen Signals. **Fig. 4** zeigt eine erste Ausführungsform eines Empfängers. **Fig. 5a** zeigt ein im Empfänger vorliegendes Signal vor der Durchführung einer Frequenzkorrektur. **Fig. 5b** zeigt ein im Empfänger vorliegendes Signal nach der Durchführung einer Frequenzkorrektur. **Fig. 6a** zeigt ein demoduliertes Signal am Ausgang des Demodulators des Empfängers ohne Frequenzkorrektur. **Fig. 6b** zeigt ein demoduliertes Signal am Ausgang des Demodulators des Empfängers mit Frequenzkorrektur. **Fig. 7** zeigt die vorgenommene Phasenkorrektur.

In **Fig. 1** ist die Übertragung von Daten von einem Sender 10 zu einem Empfänger 20 über einen Datenkanal 30 näher dargestellt. Der Datenkanal 30 ist im vorliegenden Ausführungsbeispiel der Erfindung als Glasfaserleitung realisiert.

In **Fig. 2** ist die in **Fig. 1** dargestellte Ausführungsform eines erfindungsgemäßen Senders 10 im Detail dargestellt. Der Sender 10 umfasst eine schmalbandige Strahlungsquelle 16, die im vorliegenden Ausführungsbeispiel als Laser mit einer Wellenlänge von etwa 1550 nm ausgebildet ist. Die Frequenz der Strahlung wird mit fₒₚₜ bezeichnet. Grundsätzlich kann die Strahlungsquelle unterschiedliche Wellenlängen aufweisen, beispielsweise auch im sichtbaren Licht. Bevorzugt werden jedoch Wellenlängen im infraroten Bereich zwischen 1400 nm und 1650 nm verwendet.

Der Strahlungsquelle ist ein Pulsgenerator 11 nachgeschaltet, dem die von der Strahlungsquelle 16 abgegebene Strahlung zugeführt ist. Der Pulsgenerator 11 ändert in vorgegebenen, periodisch wiederkehrenden Zeitabschnitten seine Durchlässigkeit für die ihm zugeführte Strahlung, sodass an seinem Ausgang ein gepulstes Signal P mit elektromagnetischer Strahlung mit sich periodisch ändernder Intensität vorliegt, wobei die Frequenz f_{D} der Intensitätsänderung vorzugsweise im Bereich von zwischen 100 MHz und 10 GHz liegt. Im vorliegenden Ausführungsbeispiel wird exemplarisch eine Symbolrate f_{D} von 100MHz gewählt.

Weiters wird dem Sender 10 über einen Eingang das zu übertragende Datensignal D als elektrisches Signal übermittelt. Dabei kann es sich beispielsweise um ein elektrisches Digitalsignal mit einer Symbolrate von 100 MHz handeln. Der Sender 10 weist einen Modulator 13, im vorliegenden Ausführungsbeispiel der Erfindung einen Amplituden-Phasenmodulator, auf. Dem Modulator 13 ist einerseits das gepulste Signal P, andererseits das Datensignal zugeführt. Der Modulator 13 ist dazu ausgebildet, ein Nutzsignal N zu erstellen, das im wesentlichen gleiche Eigenschaften aufweist wie das gepulste Signal, jedoch mit dem Unterschied, dass die einzelnen Pulse entsprechend der im Datensignal D enthaltenen Signale phasenverschoben sind.

Im vorliegenden Ausführungsbeispiel der Erfindung wird die Phasenmodulation vorgenommen, indem konkret jedes Symbol des Datensignals D jeweils vier mögliche Zustände erlaubt und der Modulator 13 entsprechend dem jeweiligen Symbol eine Phasenverschiebung des Signals, beispielsweise um 45, 135, 225 oder 315° vornimmt.

Das Nutzsignal N (**Fig. 3**) weist seine stärkste Intensität im Frequenzbereich der Strahlung der Strahlungsquelle 16 auf. Das Signal hat eine Bandbreite 2 f_{D}, die der Symbolrate f_{D} des Datensignals entspricht; im vorliegenden Fall von etwa 100 MHz.

Weiters wird das gepulste Signal P einem weiteren Modulator 12 zugeführt, der grundsätzlich denselben Aufbau haben kann, wie der Modulator 13. Der weitere Modulator wird von einem elektrischen Pilotsignal angesteuert, das in einem Oszillator 17 generiert wird und dessen Frequenz f_{R} sich normalerweise oberhalb der Symbolfrequenz f_{D} befindet, imkonkreten Fall bei 1 GHz.. Mittels des Modulators 12 wird ein optisches Referenzsignal R erstellt. Das Pilotsignal ist phasenstarr zum Datensignal D.

In der vorliegenden konkreten Ausführungsform der Erfindung wird für die Erstellung des Referenzsignals R vorteilhaft ein Einseitenbandmodulator verwendet, um eine später notwendig werdende Trennung des Referenzsignals R vom Nutzsignal N möglichst einfach durch Hoch- und Tiefpassfilterung durchführen zu können, ohne dass es zu einer Verfälschung des Pilotsignals durch die eigene Spiegelfrequenz kommt, welche im Fall von kohärenter Detektion auch bei -f_{R} erscheint. Anstelle der normalen Einseitenmodulation kann auch eine Einseitenbandmodulation mit unterdrücktem Träger angewandt werden, dadurch wird ein mögliches Übersprechen des Referenzsignals in das Nutzsignal zusätzlich unterdrückt. Das Referenzsignal R (Fig. 3) ist schmalbandig und gegenüber der Frequenz fₒₚₜ der Strahlung um die Frequenz f_{R} des Pilotsignals verschoben.

Durch die konkret vorgenommene Erstellung des Nutzsignals N und des Referenzsignals R sind diese beiden Signale N, R zueinander in einem definierten Phasenverhältnis, das ausschließlich vom Datensignal D abhängt. Ein Phasendrift zwischen dem Nutzsignal N und dem Referenzsignal R ist hingegen mit dem hier dargestellten Aufbau nicht möglich.

Das Nutzsignal N ist gegenüber dem Referenzsignal R lediglich entsprechend der allenfalls vorgenommenen Phasenmodulation um einen durch das Datensignal D vorgegebenen Wert gegenüber dem Referenzsignal R phasenverschoben.

Das optische Nutzsignal N wird in weiterer Folge von einem Abschwächungselement 14 abgeschwächt und einem Mischer 15 zugeführt. Ebenso wird auch das Referenzsignal R dem Mischer 15 zugeführt. Der Mischer 15 überlagert das Referenzsignal R und das Nutzsignal N und ändert gegebenenfalls die Polarisationsrichtung eines oder beider der ihm zugeführten Signale N, R, sodass die Polarisationsrichtung des vom Referenzsignal R herrührenden Anteils und die Polarisationsrichtung des vom Nutzsignal N herrührenden Anteils orthogonal zueinander stehen.

Dem Mischer 15 ist eine weitere Abschwächeinheit 18 nachgeschaltet, an deren Ausgang ein Sendesignal S anliegt, das Signalanteile des Nutzsignals N und des Referenzsignals R enthält, deren Phasendifferenz vom gesendeten Datensymbol D abhängig ist, die im übrigen jedoch zueinander phasenstarr sind. Aufgrund der Anordnung der Abschwächeinheit 18 nach der Mischeinheit 15 wird neben dem Nutzsignal N auch das Referenzsignal R abgeschwächt.

Die Abschwächeinheiten 14, 18 weisen gemeinsam eine derartige Abschwächung auf, dass für jedes zu übertragende Symbol des Datensignals D weniger als 100 Photonen, vorzugsweise weniger als 10 Photonen erstellt werden und im Nutzsignal N enthalten sind. Die optische Abschwächung des Nutzsignals N ist hierbei derart stark, dass der Anteil des Nutzsignals N im Sendesignal S am Ausgang des Senders 10 so weit geschwächt ist, dass die im Nutzsignal enthaltene Information durch ein unbefugtes Abhören gestört wird und dadurch ein Lauschangriff leicht detektiert werden kann.Des weiteren ist das Nutzsigal so schwach, dass eine Rückgewinnung der im Nutzsignal N enthaltenen Informationen nicht ohne die im Folgenden beschriebenen Zusatzmaßnahmen möglich ist.

Weiters ist es erforderlich, dass der Anteil des Referenzsignals R am Übertragungssignal S am Ausgang des Senders 10 frei von Informationen ist, die im Nutzsignal N enthalten sind. Dies hat insbesondere zur Folge, dass das von einem Dritten allenfalls durch unbefugten Zugriff auf die Glasfaserleitung 30 erkennbare oder detektierbare Referenzsignal R die im Nutzsignal N enthaltenen Daten nicht enthält und auf diese Art kein Zugriff auf die Daten D möglich ist, ohne die wenigen Photonen des Nutzsignals abzuschwächen oder zumindest ein detektierbares Rauschen im Empfänger zu erzeugen.

Weiters ist es erforderlich, dass das Referenzsignal R vom Nutzsignal N trennbar ist. Dies bedeutet, dass prinzipiell die Möglichkeit bestehen muss, dass ein Empfänger 20 dazu in der Lage ist, dass das Nutzsignal N aus dem Übertragungssignal S herauszufiltern. Dies kann, wie bereits erwähnt, insbesondere dadurch erreicht werden, dass das Nutzsignal N eine vom Referenzsignal R abweichende Frequenz und/oder Polarisation und/oder Sendezeit und/oder spatiale Mode aufweist.

In **Fig. 4** ist eine Ausführungsform eines erfindungsgemäßen Empfängers 20 näher dargestellt. Zu beachten ist in diesem Zusammenhang, dass der Anteil des Nutzsignals N im Übertragungssignal S so schwach ist, dass die zentrale Frequenz fₒₚₜ und Phasenlage des Nutzsignals N vom Empfänger 20 nicht detektierbar ist, sodass für die Identifiation des Nutzsignals N im Übertragungssignal S über das Referenzsignal R erfolgt.

Der Empfänger 20 weist eine schmalbandige Strahlungsquelle 21 auf, deren optische Frequenz f_{L} innerhalb eines vorgegebenen Frequenzbereichs verschoben werden kann. Dieser Bereich umfasst die Frequenz fₒₚₜ der Strahlungsquelle 16 des Senders 10, vorteilhafterweise kann die Frequenz f_{L} der schmalbandigen Strahlungsquelle 21 zwischen fₒₚₜ - 10 f_{R} und fₒₚₜ - 10 f_{R} eingestellt werden.

Im Ausgangszustand, dh solange noch kein Übertragungssignal S am Eingang des Empfängers 20 eingelangt ist, ist die Frequenz f_{L} der schmalbandigen Strahlungsquelle 21 auf einen nicht näher definierten Wert innerhalb des vorgegebenen Bereichs festgesetzt. Das von der Strahlungsquelle 21 erstellte Strahlungssignal L wird in einem Mischer 22 mit dem Übertragungssignal S überlagert. Das derart erstellte Signal ist in **Fig. 5a** näher dargestellt. Aus **Fig. 5a** ist ersichtlich, dass die Frequenz der von der Strahlungsquelle 21 abgegebenen Strahlung nicht der Frequenz fₒₚₜ entspricht, die im Zentrum des Nutzsignals steht. Die beiden Frequenzen f_{L} des empfängerseitigen Strahlungssignals L und fₒₚₜ des Nutzsignals N stimmen nicht miteinander überein, viemehr liegen diese Frequenzen um einen Frequenzunterschied ΔL auseinander.

Das in **Fig. 5a** dargestellte Signal S+L wird an einen Photodetektor 23 weiter geleitet. Um eine höhere Sensitivität zu erreichen werden meist zwei Photodetektoren zu einem "balanced receiver" zusammengeschaltet. Der Photodetektor 23 hat im Wesentlichen die Eigenschaft, aus dem einen einlangenden optischen Signal ein elektrisches Signal S' zu erstellen, dessen Signalamplitude dem Quadrat der Amplitude des einlangenden optischen Signals erstellt. Darüber hinaus wirkt der Photodetektor 23 wie ein Tiefpassfilter, sodass Signalanteile mit einer Frequenz von mehr als zB 50 GHz nicht an den Ausgang des Photodetektors 23 gelangen. Aufgrund dieses Zusammenhangs weist das am Ausgang der Photodiode 23 anliegenden Signals S' den in **Fig. 6a** dargestellten elektrischen Frequenzverlauf fₑₗ auf. Dabei ist es von Vorteil wenn der Photodetektor 23 Schrotrausch limitiert ist, dh wenn das Gesamtrauschen des Detektors hauptsächlich durch die statistische Verteilung der einfallenden Photonen verursacht wird.

Das am Ausgang des Photodetektors 23 anliegende Signal S' weist einen dem Nutzsignal N entsprechenden Signalanteil N' auf, dessen Zentralfrequenz bei ΔL liegt, wobei ΔL dem Frequenzunterschied zwischen der Frequenz des f_{L} des empfängerseitigen Strahlungssignals L und der Frequenz fₒₚₜ des Nutzsignals N liegt. Um den Phasendrift des Nutzsignals N' zu minimieren und somit eine einfache und vorteilhafte Detektion des stark abgeschwächten Nutzsignals N' zu ermöglichen, wird der Frequenzunterschied ΔL reduziert, sodass die Zentralfrequenz des Nutzsignals N' etwa bei 0 Hz zu liegen kommt.

Zu diesem Zweck wird die Frequenz des f_{L} des empfängerseitigen Strahlungssignals L aufgrund des übermittelten Referenzsignals R, wie im Folgenden dargestellt, derart angepasst, dass der Unterschied zwischen der Frequenz des empfängerseitigen Strahlungssignals L und der Frequenz des übermittelten Referenzsignals R der Frequenz f_{R} des Pilottonsignals entspricht.

Zu diesem Zweck werden mittels eines Filters 24 der dem Referenzsignal R zuzuzählenden Anteil R' des elektrischen Signals S' ermittelt und dessen Frequenz ermittelt. Von dieser Frequenz wird der Wert f_{R} abgezogen und man erhält ΔL. Die Frequenzregelungseinheit 25 regelt aufgrund der so ermittelten Frequenzdifferenz ΔL die Frequenz f_{L} des Strahlungssignals derart, dass die Frequenzdifferenz ΔL unterhalb eines vorgegebenen Schwellenwerts bleibt. Nach Abschluss der Regelung ergibt sich am Ausgang des Mischers 22 das in Fig. 5b dargestellte Signal, bei dem die Frequenz der Strahlung f_{L} des Strahlungssignals L der Zentralfrequenz fₒₚₜ des im Übertragungssignals enthaltenen Nutzsignals N entspricht.

Am Ausgang des Photodetektors 23 ergibt sich nach Abschluss der Regelung das in Fig. 6b dargestellte Signal S', bei dem der dem Nutzsignal N zuzurechnende Anteil N' eine Zentralfrequenz von 0 Hz hat und der dem Referenzsignal R zuzurechnende Anteil R' bei einer Frequenz von f_{R} liegt.

Am Ausgang des Filters 24 werden der dem Nutzsignal N zuzurechnende Anteil N' sowie der dem Referenzsignal R zuzurechnende Anteil R' des vom Photodetektor erstellten Signals S' zur Verfügung gehalten und digitalisiert; anschließend misst eine Korrektureinheit 26 für eine Anzahl an Zeitpunkten (t₁, t₂, t₃, ...) die Phasendifferenz Δϕ zwischen den Signalanteilen R' und dem empfängerseitigen Strahlungssignal L und bestimmt aufgrund der Phasendifferenz (**Fig. 7**) das konkrete dem empfangenen Datensignal D' Symbol zuzuordnende Symbol.

## Patentansprüche

1. Verfahren zur Übertragung von Daten in einem Datensignal (D) von einem Sender (10) zu einem Empfänger (20) über einen Datenkanal (30),
- wobei ein elektromagnetisches Strahlungssignal, insbesondere mit einer Wellenlänge im optischen Bereich oder im Infraroten Bereich, geringer Bandbreite, insbesondere ein Lasersignal, erstellt wird und periodisch gepulst wird und derart ein gepulstes Signal (P) erstellt wird,
- wobei das zu übertragende Datensignal (D) elektrisch zur Verfügung gestellt wird, wobei das gepulste Signal (P) aufgrund des zu übertragenden Datensignals (D), insbesondere mittels optischer Phasen- und/oder Amplitudenmodulation, moduliert wird und derart ein Nutzsignal (N) erstellt wird,
- wobei durch Modulation des gepulsten Signals (P) ein optisches Referenzsignal (R) mit einer vorgegebenen Frequenz erstellt wird, die gegenüber der optischen Trägerfrequenz, die für die Phasen- und Amplitudenmodulation des Nutzsignals (N) herangezogen wurde, festgelegt ist, insbesondere dieser entspricht oder zu dieser eine konstante Differenz aufweist,
- wobei das optische Referenzsignal (R) optisch phasenstarr zum Nutzsignal (N) ist, und die Phasendifferenz des optischen Referenzsignals (R) und des Nutzsignals vom Datensignal abhängt,
- wobei das optische Referenzsignal (R) mit dem Nutzsignal (N) überlagert wird und derart ein Übertragungssignal (S) erstellt und am Ausgang des Senders (10) abgegeben wird, und das Übertragungssignal (S) gegebenenfalls über den Datenkanal (30) versandt wird, insbesondere an einen Empfänger (20) übertragen wird,
- wobei das im Übertragungssignal (10) enthaltene optische Referenzsignal (R) am Ausgang des Senders (10) frei von Informationen ist, die im Nutzsignal (N) enthalten sind,
- wobei das optische Referenzsignal (R) vom Nutzsignal (N) trennbar ist, insbesondere eine von dem Nutzsignal abweichende Frequenz und/oder Polarisation und/oder Sendezeit und/oder spatiale Mode aufweist, und
- wobei das Nutzsignal (N) vor und/oder nach der Überlagerung mit dem Referenzsignal (R) derart abgeschwächt wird, dass der dem Nutzsignal (N) zuzurechnende Anteil des Übertragungssignals (S) maximal 100, insbesondere maximal 10 Photonen umfasst, und das so erstellte Signal als Übertragungssignal (S) an einen Empfänger übertragen wird,
**dadurch gekennzeichnet,**
- **dass** im Empfänger (20) ein empfängerseitiges optisches Strahlungssignal (L) erstellt wird und dieses mit dem Übertragungssignal (S) optisch überlagert und mittels eines Photodetektors in ein elektrisches Signal (S') umgewandelt wird, dessen Signalamplitude nichtlinear, insbesondere quadratisch, von der Lichtstärke des Übertragungssignals (S) abhängt,
- **dass** die Frequenz des empfängerseitigen optischen Strahlungssignals (L) auf die Frequenz des im Übertragungssignal (S) enthaltenen optischen Referenzsignals (R') oder gegenüber dieser Frequenz festgelegte Frequenz gesetzt wird,
- **dass** aus dem Übertragungssignal das Referenzsignal (R') und das Nutzungssignal (N') herausgefiltert wird,
- **dass** für eine Anzahl von Zeitpunkten die Phasendifferenz zwischen dem im Übertragungssignal (S) enthaltenen optischen Referenzsignal (R') und dem empfängerseitigen optischen Referenzsignal (L) ermittelt wird, und ein bereinigtes Nutzsignal erstellt wird, das gegenüber dem aus dem Übertragungssignal ermittelten Nutzsignal (N') um die ermittelte Phasendifferenz korrigiert ist, und
- **dass** mithilfe der so ermittelten Phasendifferenz die übertragenen Daten (D) ermittelt werden, wobei das bereinigte Nutzsignal mittels Demodulation, insbesondere Phasen- und/oder Amplitudendemodulation, ermittelt wird.

2. Verfahren nach Anspruch 1, **dadurch gekennzeichnet, dass** das optische Referenzsignal (R) des Übertragungssignals (S) weniger stark abgeschwächt wird als das Nutzsignal (N), insbesondere dass das Referenzsignal (R) um einen Faktor 10 bis 100 oder um einen Faktor 10 bis 1000 energiereicher ist als das Nutzsignal (N).

## Claims

1. Method for transmitting data in a data signal (D) from a transmitter (10) to a receiver (20) via a data channel (30),
- wherein an electromagnetic radiation signal is generated, in particular with a wavelength in the optical range or in the infrared range, of low bandwidth, in particular a laser signal, and is periodically pulsed and in this way a pulsed signal (P) is generated,
- wherein the data signal (D) to be transmitted is made available electrically, wherein the pulsed signal (P) is modulated based on the data signal (D) to be transmitted, in particular by means of optical phase and/or amplitude modulation, and a useful signal (N) is generated in this way,
- wherein by modulating the pulsed signal (P) an optical reference signal (R) is generated with a predefined frequency, which is determined with respect to the optical carrier frequency used for the phase and amplitude modulation of the useful signal (N), in particular corresponds thereto or has a constant difference from the latter,
- wherein the optical reference signal (R) is optically phase-locked to the useful signal (N), and the phase difference of the optical reference signal (R) and the useful signal is dependent on the data signal,
- wherein the optical reference signal (R) is superimposed with the useful signal (N) and in this way a transmission signal (S) is produced and delivered at the output of the transmitter (10), and the transmission signal (S) is sent via the data channel if necessary, in particular is transmitted to a receiver (20),
- wherein the optical reference signal (R) included in the transmission signal (10) at the output of the transmitter (10) is free of information that is included in the useful signal (N),
- wherein the optical reference signal (R) can be separated from the useful signal (N), in particular has a frequency and/or polarisation and/or transmission time and/or spatial mode that differs from the useful signal, and
- wherein the useful signal (N) is attenuated before and/or after being superimposed by the reference signal (R) such that the component of the transmission signal (S) attributable to the useful signal (N) comprises a maximum of 100, in particular a maximum of 10 photons, and the signal produced in this way is transmitted as a transmission signal (S) to a receiver,
**characterised in that**
- an optical radiation signal (L) is generated in the receiver (20) on the receiver side and this is optically superimposed by the transmission signal (S) and converted by means of a photodetector into an electrical signal (S'), the signal amplitude of which depends non-linearly, in particular quadratically, on the light intensity of the transmission signal (S),
- the frequency of the optical radiation signal (L) on the receiver side is set to the frequency of the optical reference signal (R') included in the transmission signal (S) or to a frequency which is fixed relative to this frequency,
- the reference signal (R') and the useful signal (N') are filtered out of the transmission signal,
- for a number of time points the phase difference between the optical reference signal (R') included in the transmission signal (S) and the receiver-side optical reference signal (L) is determined, and a cleaned useful signal is produced which is corrected by the determined phase with respect to the useful signal (N') determined from the transmission signal, and
- the transmitted data (D) are determined by means of the phase difference determined in this way, wherein the cleaned useful signal is determined by means of demodulation, in particular phase and/or amplitude demodulation.

2. Method according to claim 1, **characterised in that** the optical reference signal (R) of the transmission signal (S) is attenuated less strongly than the useful signal (N), in particular **in that** the reference signal (R) is more energetic than the useful signal (N) by a factor of 10 to 100 or by a factor of 10 to 1000.

## Revendications

1. Procédé de transmission de données dans un signal de données (D) d'un émetteur (10) à un récepteur (20) par l'intermédiaire d'un canal de données (30),
- dans lequel un signal de rayonnement électromagnétique, en particulier avec une longueur d'onde dans le domaine optique ou dans le domaine infrarouge, de faible largeur de bande, en particulier un signal laser, est créé et est pulsé périodiquement et un signal pulsé (P) est ainsi créé,
- dans lequel le signal de données (D) à transmettre est mis à disposition électriquement, dans lequel le signal pulsé (P) est modulé sur la base du signal de données (D) à transmettre, en particulier au moyen d'une modulation de phase et/ou d'amplitude optique, et un signal utile (N) est ainsi créé,
- dans lequel, par modulation du signal pulsé (P), un signal de référence optique (R) est créé avec une fréquence prédéterminée, qui est fixée par rapport à la fréquence porteuse optique qui a été utilisée pour la modulation de phase et d'amplitude du signal utile (N), qui correspond en particulier à celle-ci ou qui présente une différence constante par rapport à celle-ci,
- dans lequel le signal de référence optique (R) est optiquement rigide en phase par rapport au signal utile (N), et la différence de phase du signal de référence optique (R) et du signal utile dépend du signal de données,
- dans lequel le signal de référence optique (R) est superposé au signal utile (N) et un signal de transmission (S) est ainsi créé et délivré à la sortie de l'émetteur (10), et le signal de transmission (S) est le cas échéant envoyé par l'intermédiaire du canal de données (30), en particulier est transmis à un récepteur (20),
- dans lequel le signal de référence optique (R) contenu dans le signal de transmission (10) est exempt, à la sortie de l'émetteur (10), d'informations qui sont contenues dans le signal utile (N),
- dans lequel le signal de référence optique (R) est séparable du signal utile (N), en particulier présente une fréquence et/ou une polarisation et/ou un temps d'émission et/ou un mode spatial différents du signal utile, et
- dans lequel le signal utile (N) est atténué avant et/ou après la superposition avec le signal de référence (R) de sorte que la partie du signal de transmission (S) à attribuer au signal utile (N) comprend au maximum 100, en particulier au maximum 10 photons, et le signal ainsi créé est transmis à un récepteur en tant que signal de transmission (S),
**caractérisé en ce**
- **qu'**un signal de rayonnement optique (L) côté récepteur est créé dans le récepteur (20) et est superposé optiquement au signal de transmission (S) et converti au moyen d'un photodétecteur en un signal électrique (S') dont l'amplitude de signal dépend de manière non linéaire, en particulier quadratique, de l'intensité lumineuse du signal de transmission (S),
- **que** la fréquence du signal de rayonnement optique (L) côté récepteur est définie à la fréquence du signal de référence optique (R') contenu dans le signal de transmission (S) ou à une fréquence fixée par rapport à cette fréquence,
- **que** le signal de référence (R') et le signal d'utilisation (N') sont filtrés à partir du signal de transmission,
- **que** la différence de phase entre le signal de référence optique (R') contenu dans le signal de transmission (S) et le signal de référence optique (L) côté récepteur est déterminée pour un certain nombre de moments, et un signal utile ajusté est établi, qui est corrigé de la différence de phase déterminée par rapport au signal utile (N') déterminé à partir du signal de transmission, et
- **que** les données transmises (D) sont déterminées à l'aide de la différence de phase ainsi déterminée, dans lequel le signal utile ajusté est déterminé au moyen d'une démodulation, en particulier d'une démodulation de phase et/ou d'amplitude.

2. Procédé selon la revendication 1, **caractérisé en ce que** le signal de référence optique (R) du signal de transmission (S) est moins fortement atténué que le signal utile (N), en particulier **en ce que** le signal de référence (R) est plus riche en énergie que le signal utile (N) d'un facteur 10 à 100 ou d'un facteur 10 à 1000.
